(19) Europäisches Patentamt
European Patent Office
Office européen des brevets

(11) EP 1 440 120 B1

(12) **EUROPEAN PATENT SPECIFICATION**

(45) Veröffentlichungstag und Bekanntmachung des Hinweises auf die Patenterteilung:
**15.04.2009 Patentblatt 2009/16**

(21) Anmeldenummer: **02776980.1**

(22) Anmeldetag: **04.09.2002**

(51) Int Cl.:
***C08L 51/04*** *(2006.01)*

(86) Internationale Anmeldenummer:
**PCT/EP2002/009872**

(87) Internationale Veröffentlichungsnummer:
**WO 2003/025061 (27.03.2003 Gazette 2003/13)**

(54) **ABS-ZUSAMMENSETZUNGEN MIT VERBESSERTEN EIGENSCHAFTSKOMBINATIONEN**

ABS COMPOSITIONS WITH IMPROVED CHARACTERISTIC COMBINATIONS

COMPOSITIONS ABS PRESENTANT DES COMBINAISONS DE CARACTERISTIQUE AMELIOREES

(84) Benannte Vertragsstaaten:
**AT BE BG CH CY CZ DE DK EE ES FI FR GB GR IE IT LI LU MC NL PT SE SK TR**

(30) Priorität: **17.09.2001 DE 10145773**

(43) Veröffentlichungstag der Anmeldung:
**28.07.2004 Patentblatt 2004/31**

(73) Patentinhaber: **LANXESS Deutschland GmbH**
**51369 Leverkusen (DE)**

(72) Erfinder: **EICHENAUER, Herbert**
**41539 Dormagen (DE)**

(74) Vertreter: **Gille Hrabal Struck Neidlein Prop Roos**
**Postfach 18 04 09**
**40571 Düsseldorf (DE)**

(56) Entgegenhaltungen:
**WO-A-89/05836**
**DE-A- 10 008 419**
**DE-A- 10 008 420**
**US-A- 4 233 409**
**US-A- 5 041 498**
**US-A- 5 605 963**
**US-A- 5 696 204**
**US-A- 5 708 079**
**US-A- 5 883 190**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 440 120 B1

## Beschreibung

Die Erfindung betrifft ABS-Zusammensetzungen mit einer Kombination aus sehr guter Zähigkeit, guter Verarbeitbarkeit, einstellbarem Oberflächenglanz, guter Eigenfarbe und verminderter Opazität.

ABS-Formmassen werden seit vielen Jahren in großen Mengen für die Herstellung von Formteilen aller Art eingesetzt. Dabei reicht das Eigenschaftsspektrum dieser thermoplastischen Harze von relativ spröde bis hochzäh.

Ein spezielles Einsatzgebiet für ABS-Formmassen ist die Herstellung von Formteilen mit hohen Anforderungen an die Zähigkeit bei Schlageinwirkung sowie die Möglichkeit zur gezielten Einstellung (Abstufungen zwischen glänzend und matt) des Oberflächenglanzes, z.B. im Automobilbereich oder zur Herstellung von Gehäuseteilen.

ABS-Produkte mit hohen Zähigkeiten und relativ hohem Oberflächenglanz lassen sich unter Verwendung von herkömmlichem Emulsions-ABS bei Einsatz hoher Kautschukmengen herstellen; damit verbunden sind jedoch Nachteile bei anderen Eigenschaften, z.B. E-Modul, Wärmeformbeständigkeit und thermoplastische Fließfähigkeit.

ABS-Produkte mit relativ niedrigem Oberflächenglanz sind z.B. durch Polymerisation nach dem Lösungs- oder Massepolymerisationsverfahren zugänglich; allerdings werden nach diesem Verfahren keine Produkte mit hohen Tieftemperaturzähigkeiten erhalten.

Durch Abmischen von herkömmlichen Emulsions-ABS-Typen mit Lösungs- oder Masse-ABS-Typen lassen sich zwar punktuelle Verbesserungen erzielen (vgl. z.B. US-A 4 430 478), die hohen Anforderungen an Zähigkeit und Fließfähigkeit bei gleichzeitigem Erhalt des für Masse-ABS charakteristischen niedrigen Oberflächenglanzes werden durch diese Werkstoffe jedoch nicht erfüllt.

Auch ist bekannt, durch Massepolymerisation hergestellte ABS-Polymerisate mit verschiedenen, durch Emulsionspolymerisation hergestellten Pfropfkautschukpolymerisaten mit kleiner und großer Teilchengröße abzumischen (vgl. z.B. US-A 4 430 478, US-A 4 713 420, EP-A 190 884, EP-A 390 781, EP-A 436 381 und dort zitierte Literatur), die resultierenden Produkte haben jedoch keine verbesserte Tieftemperaturzähigkeit.

EP-A 845 497 beschreibt eine Mischung aus ABS-Polymerisat, erhalten durch Masse-oder Suspensionspolymerisation und speziellem Pfropfkautschuk, erhalten durch Emulsionspolymerisation unter Verwendung zweier Kautschukkomponenten. Die Zähigkeit der daraus hergestellten Formmassen sind jedoch für die Herstellung extrem beanspruchter Formteile oft nicht ausreichend.

Alle diese beschriebenen ABS-Polymerisate weisen neben den angegebenen mechanischen Nachteilen eine nicht optimale Einfärbbarkeit aufgrund zu hoher Opazität und nicht ausreichender Eigenfarbe auf, wodurch zum Einfärben der Formmassen erhöhte Pigmentmengen benötigt werden und dadurch die Zähigkeit zusätzlich negativ beeinflusst wird.

Es wurde nun gefunden, dass durch Kombination mindestens zweier spezieller durch Emulsionspolymerisation hergestellter Pfropfkautschuke mit mindestens einem durch Lösungs-, Masse- oder Suspensionspolymerisation hergestellten Pfropfpolymerisat Produkte mit einer Kombination aus sehr guter Zähigkeit, guter Verarbeitbarkeit, einstellbarem Oberflächenglanz, guter Eigenfarbe und verminderter Opazität erhalten werden.

Gegenstand der Erfindung sind Zusammensetzungen wie sie in den Ansprüchen beschrieben sind.

Bevorzugte erfindungsgemäße Zusammensetzungen enthalten 1 bis 50 Gew.-Teile, vorzugsweise 2,5 bis 45 Gew.-Teile und besonders bevorzugt 5 bis 40 Gew.-Teile der durch radikalische Emulsionspolymerisationen hergestellten Pfropfkautschuke A) und B) und 50 bis 99 Gew.-Teile, vorzugsweise 55 bis 97,5 Gew.-Teile und besonders bevorzugt 60 bis 95 Gew.-Teile Pfropfpolymerisat C).

Dabei können die durch radikalische Emulsionspolymerisationen hergestellten Pfropfkautschuke A) und B) in beliebigen Mengenanteilen, üblicherweise im Bereich 5 bis 95 Gew.-Teile A) und 95 bis 5 Gew.-Teile B), enthalten sein; bevorzugt sind 20 bis 90 Gew.-Teile A) und 10 bis 80 Gew.-Teile B), besonders bevorzugt sind 30 bis 80 Gew.-Teile A) und 20 bis 70 Gew.-Teile B), ganz besonders bevorzugt sind 40 bis 75 Gew.-Teile A) und 25 bis 60 Gew.-Teile B) (jeweils bezogen auf 100 Gew.-Teile A+B) enthalten.

Die Pfropfkautschuke A) und B) weisen vorzugsweise Kautschukgehalte über 50 Gew.-%, besonders bevorzugt über 55 Gew.-%, und ganz besonders bevorzugt über 58 Gew.-% auf, das Pfropfpolymerisat C) weist vorzugsweise Kautschukgehalte von 3 bis 50 Gew.-%, besonders bevorzugt 5 bis 30 Gew.-%, und ganz besonders bevorzugt 6 bis 25 Gew.-% auf.

Erfindungsgemäße Formmassen können weiterhin als Komponente D) mindestens ein thermoplastisches kautschukfreies Polymerisat erhalten durch Polymerisation von mindestens einem harzbildenden Vinylmonomeren, vorzugsweise von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid enthalten.

Falls zusätzlich ein Polymerisat gemäß Komponente D) verwendet wird, beträgt die Menge bis zu 100 Gew.-Teilen, vorzugsweise bis zu 80 Gew.-Teilen und besonders bevorzugt bis zu 60 Gew.-Teilen (jeweils bezogen auf 100 Gew.-Teile A+B+C).

Außerdem können die erfindungsgemäßen Zusammensetzungen weitere kautschukfreie nicht aus Vinylmonomeren aufgebaute Thermoplastharze enthalten, wobei man diese Thermoplastharze gegebenenfalls in Mengen bis zu 1000 Gew.-Teilen, vorzugsweise bis zu 700 Gew.-Teilen und besonders bevorzugt bis zu 500 Gew.-Teilen (jeweils

bezogen auf 100 Gew.-Teile A+B+C+D) verwendet.

Der zur Herstellung des Pfropfkautschuks A) eingesetzte in Latexform vorliegende Kautschuk a) als auch der zur Herstellung des Pfropfkautschuks B) eingesetzte in Latexform vorliegende Kautschuk b) können in Form von Latices mit monomodaler, bimodaler, trimodaler oder multimodaler Teilchengrößenverteilung vorliegen.

Bevorzugt sind solche Kombinationen von Pfropfkautschuken A) und B), bei deren Herstellung mindestens einer der eingesetzten Kautschuklatices a) und b) eine bimodale oder trimodale Teilchengrößenverteilung aufweist.

Besonders bevorzugt sind solche Kombinationen von Pfropfkautschuken A) und B), bei deren Herstellung der eingesetzte Kautschuklatex a) eine monomodale Teilchengrößenverteilung und der eingesetzte Kautschuklatex b) eine bimodale Teilchengrößenverteilung aufweist oder bei deren Herstellung der eingesetzte Kautschuklatex a) eine monomodale Teilchengrößenverteilung und der eingesetzte Kautschuklatex b) eine trimodale Teilchengrößenverteilung aufweist oder bei deren Herstellung der eingesetzte Kautschuklatex a) eine bimodale Teilchengrößenverteilung und der eingesetzte Kautschuklatex b) eine bimodale Teilchengrößenverteilung aufweist oder bei deren Herstellung der eingesetzte Kautschuklatex a) eine bimodale Teilchengrößenverteilung und der eingesetzte Kautschuklatex b) eine trimodale Teilchengrößenverteilung aufweist oder bei deren Herstellung der eingesetzte Kautschuklatex a) eine bimodale Teilchengrößenverteilung und der eingesetzte Kautschuklatex b) eine monomodale Teilchengrößenverteilung aufweist.

Ganz besonders bevorzugt sind solche Kombinationen von Pfropfkautschuken A) und B), bei deren Herstellung der eingesetzte Kautschuklatex a) eine monomodale Teilchengrößenverteilung und der eingesetzte Kautschuklatex b) eine bimodale Teilchengrößenverteilung aufweist oder bei deren Herstellung der eingesetzte Kautschuklatex a) eine bimodale Teilchengrößenverteilung und der eingesetzte Kautschuklatex b) eine bimodale Teilchengrößenverteilung aufweist.

Die mittleren Teilchendurchmesser ($d_{50}$-Wert) der zur Herstellung der Pfropfkautschuke A) und B) eingesetzten monomodalen, bimodalen, trimodalen oder multimodalen Kautschuklatices a) und b) können in weiten Bereichen variiert werden. Geeignete Teilchendurchmesser liegen z.B. zwischen 50 und 600 nm, vorzugsweise zwischen 80 und 550 nm und besonders bevorzugt zwischen 100 und 500 nm.

Vorzugsweise sind die mittleren Teilchendurchmesser ($d_{50}$) der eingesetzten Kautschuklatices a) kleiner als die mittleren Teilchendurchmesser ($d_{50}$) der eingesetzten Kautschuklatices b), besonders bevorzugt unterscheiden sich die mittleren Teilchendurchmesser der eingesetzten Kautschuklatices a) und b) um mindestens 40 nm, ganz besonders bevorzugt um mindestens 80 nm.

Die Kautschuke a) und b) zur Herstellung der Pfropfkautschuke A) und B) sind Butadienpolymerisatlatices, die durch Emulsionspolymerisation von Butadien hergestellt werden können. Dieses Polymerisationsverfahren ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-%, vorzugsweise bis zu 30 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispielhaft und bevorzugt für solche Monomere werden Isopren, Chloropren, Acrylnitril, Styrol, $\alpha$-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol genannt; vorzugsweise wird Butadien alleine eingesetzt. Es ist bei der Herstellung von a) und b) auch möglich, nach bekannten Methoden zunächst ein feinteiliges Butadienpolymerisat herzustellen und es anschließend in bekannter Weise zur Einstellung der erforderlichen Teilchengröße zu agglomerieren. Einschlägige Techniken sind beschrieben (vergl. EP-A 0 029 613; EP-A 0 007 810; DD-A 144 415; DE-A 12 33 131; DE-A 12 58 076; DE-A 21 01 650 ; US-A 1 379 391).

Prinzipiell kann man die Kautschuklatices a) und b) auch herstellen durch Emulgieren von feinteiligen Kautschukpolymerisaten in wässrigen Medien (vergl. JP-A 55-125 102).

Zur Herstellung von Kautschuklatices a) bzw. b) mit bimodalen, trimodalen oder multimodalen Teilchengrößenverteilungen werden vorzugsweise monomodale Kautschuklatices unterschiedlicher mittlerer Teilchengröße und enger Teilchengrößenverteilung miteinander vermischt.

Unter monomodalen Kautschuklatices mit enger Teilchengrößenverteilung im Sinne der Erfindung werden solche Latices verstanden, die eine Breite der Teilchengrößenverteilung (gemessen als $d_{90}$-$d_{10}$ aus der integralen Teilchengrößenverteilung) von 30 bis 150 nm, vorzugsweise von 35 bis 100 nm und besonders bevorzugt von 40 bis 80 nm aufweisen.

Die Unterschiede der mittleren Teilchendurchmesser ($d_{50}$-Wert aus der integralen Teilchengrößenverteilung) der zur Abmischung verwendeten Kautschuklatices bei der bevorzugten Erzeugung bimodaler, trimodaler oder multimodaler Teilchengrößenverteilungen betragen vorzugsweise mindestens 30 nm, besonders bevorzugt mindestens 60 nm und ganz besonders bevorzugt mindestens 80 nm.

Bevorzugt werden monomodale Kautschuklatices mit enger Teilchengrößenverteilung durch Emulsionspolymerisation geeigneter Monomerer, vorzugsweise Butadien enthaltender Monomermischungen, besonders bevorzugt Butadien, nach der sogenannten Saatpolymerisationstechnik hergestellt, bei der zunächst ein feinteiliges Polymerisat, vorzugsweise ein Kautschukpolymerisat, besonders bevorzugt ein Butadienpolymerisat, als Saatlatex hergestellt und

dann durch Weiterumsatz mit kautschukbildenden Monomeren, vorzugsweise mit Butadien enthaltenden Monomeren, zu größeren Teilchen weiterpolymerisiert wird (siehe z.B. im Houben-Weyl, Methoden der Organischen Chemie, Makromolekulare Stoffe Teil 1, S.339 (1961), Thieme Verlag Stuttgart).

Dabei wird vorzugsweise unter Verwendung des Saat-Batch-Verfahrens oder des Saat-Zulauf-Verfahrens gearbeitet.

Die Gelgehalte der zur Herstellung der Pfropfkautschuke A) und B) eingesetzten Kautschuklatices a) und b) sind in der Regel unkritisch und können in weiten Bereichen variiert werden. Üblich sind Werte zwischen ca. 30 und 98 Gew.-%, vorzugsweise zwischen 40 und 95 Gew.-%.

Vorzugsweise sind die Gelgehalte der eingesetzten Kautschuklatices a) höher als die Gelgehalte der eingesetzten Kautschuklatices b), besonders bevorzugt unterscheiden sich die Gelgehalte der eingesetzten Kautschuklatices a) und b) um mindestens 5 %, ganz besonders bevorzugt um mindestens 10 %.

Die Gelgehalte der Kautschuklatices a) und b) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgator können übliche anionische Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Bestimmung des mittleren Teilchendurchmessers $d_{50}$ sowie die der $d_{10}$- und $d_{90}$-Werte kann durch Ultrazentrifugenmessung erfolgen (vgl. W. Scholtan, H. Lange: Kolloid Z. u. Z. Polymere 250, S. 782 bis 796 (1972)). Die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Pfropfpolymerisation bei der Herstellung der Pfropfkautschuke A) und B) kann so durchgeführt werden, dass das Monomerengemisch portionsweise oder kontinuierlich zu dem Kautschuklatex a) bzw. zu dem Kautschuklatex b) gegeben und polymerisiert wird.

Dabei werden bevorzugt spezielle Monomer: Kautschuk-Verhältnisse eingehalten.

Zur Erzeugung des erfindungsgemäßen Pfropfkautschuks A) müssen anorganische Persalze, ausgewählt aus Ammoniumperoxodisulfat, Kaliumperoxodisulfat, Natriumperoxodisulfat oder Mischungen daraus verwendet werden.

Die Reaktionstemperatur bei der Herstellung des erfindungsgemäßen Pfropfkautschuks A) kann in weiten Grenzen variiert werden. Sie beträgt im Allgemeinen 25°C bis 160°C, vorzugsweise 40°C bis 100°C und besonders bevorzugt 50°C bis 90°C, wobei der Temperaturunterschied zwischen Beginn und Ende der Reaktion mindestens 10°C, vorzugsweise mindestens 15°C und besonders bevorzugt mindestens 20°C beträgt.

Zur Erzeugung des erfindungsgemäßen Pfropfkautschuks B) muss mindestens ein Redox-System als Initiator verwendet werden.

Erfindungsgemäß geeignete Redoxinitiatorsysteme bestehen in der Regel aus einem organischen Oxidationsmittel und einem Reduktionsmittel, wobei im Reaktionsmedium zusätzlich Schwermetallionen vorhanden sein können; vorzugsweise wird ohne Schwermetallionen gearbeitet.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid. $H_2O_2$ kann ebenfalls verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze der Sulfinsäure, Salze der schwefligen Säure, Natriumdithionit, Natriumsulfit, Natriumhyposulfit, Natriumhydrogensulfit, Ascorbinsäure sowie deren Salze, Rongalit®C (Natriumformaldehydsulfoxylat), Mono- und Dihydroxyaceton, Zucker (z.B. Glucose oder Dextrose). Prinzipiell möglich ist auch die Verwendung von z.B. Eisen(II)-salzen wie z.B. Eisen(II)-sulfät, Zinn(II)-salzen wie z.B. Zinn(II)-chlorid, Titan (III)-salzen wie Titan(III)-sulfat; vorzugsweise werden jedoch keine derartigen Metallsalze verwendet.

Besonders bevorzugte Reduktionsmittel sind Dextrose, Ascorbinsäure(salze) oder Natriumformaldehydsulfoxylat (Rongalit®C).

Die Menge an Redoxinitiator-Komponente verteilt sich auf Oxidations- und Reduktionsmittel wie folgt:

Die Einsatzmenge an Oxidationsmittel beträgt im Allgemeinen 0,05 bis 2,0 Gew.-%, vorzugsweise von 0,1 bis 1,5 Gew.-% und besonders bevorzugt von 0,2 bis 1,2 Gew.-%. Die Menge an Reduktionsmittel beträgt im Allgemeinen 0,05 bis 1,5 Gew.-%, vorzugsweise von 0,08 bis 1,2 Gew.-% und besonders bevorzugt von 0,1 bis 1,0 Gew.-%.

Üblicherweise werden die Redoxinitiatorkomponenten in Form wässriger Lösungen, wässriger Emulsionen, wässriger Suspensionen oder sonstiger wässriger Dispersionen eingesetzt.

Die Reaktionstemperatur bei der Herstellung des erfindungsgemäßen Pfropfkautschuks B) kann in weiten Grenzen variiert werden. Sie beträgt im Allgemeinen 25°C bis 120°C, vorzugsweise 35°C bis 100°C und besonders bevorzugt 40°C bis 85°C, wobei der Temperaturunterschied zwischen Beginn und Ende der Reaktion mindestens 10°C, vorzugsweise mindestens 15°C und besonders bevorzugt mindestens 20°C beträgt.

Zur Erzeugung des erfindungsgemäßen Pfropfkautschuks A) werden vorzugsweise 20 bis 60 Gew.-Teile, besonders bevorzugt 25 bis 50 Gew.-Teile, mindestens eines Vinylmonomeren, vorzugsweise eines Gemisches aus Styrol und Acrylnitril, wobei Styrol und/oder Acrylnitril ganz oder teilweise ersetzt werden kann durch α-Methylstyrol, Methylmethacrylat oder N-Phenylmaleinimid, in Gegenwart von vorzugsweise 40 bis 80 Gew.-Teilen, besonders bevorzugt 50 bis 75 Gew.-Teilen (jeweils bezogen auf Feststoff) eines Kautschuklatex a) polymerisiert.

Zur Erzeugung des erfindungsgemäßen Pfropfkautschuks B) werden vorzugsweise 25 bis 70 Gew.-Teile, besonders bevorzugt 30 bis 60 Gew.-Teile, mindestens eines Vinylmonomeren, vorzugsweise eines Gemisches aus Styrol und Acrylnitril, wobei Styrol und/oder Acrylnitril ganz oder teilweise ersetzt werden kann durch α-Methylstyrol, Methylmethacrylat oder N-Phenylmaleinimid, in Gegenwart von vorzugsweise 30 bis 75 Gew.-Teilen, besonders bevorzugt 40 bis 70 Gew.-Teilen (jeweils bezogen auf Feststoff) eines Kautschuklatex b) polymerisiert.

Die bei diesen Pfropfpolymerisationen eingesetzten Monomeren sind vorzugsweise Mischungen aus Styrol und Acrylnitril im Gew.-Verhältnis 90:10 bis 50:50, besonders bevorzugt im Gew.-Verhältnis 80:20 bis 65:35.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).

Geeignete Molekulargewichtsregler sind beispielsweise Alkylmercaptane wie n-Dodecylmercaptan, t-Dodecylmercaptan; dimeres α-Methylstyrol; Terpinolen.

Die Herstellung des Pfropfpolymerisats C) ist bekannt (vgl. z.B. DE-A 1 300 241, DE-A 2 659 175, EP-A 67 536, EP-A 103 657, EP-A 412 801, EP-A 505 798, US-A 4 252 911, US-A 4 362 850, US-A 5 286 792 sowie die in diesen Schriften zitierte Literatur).

Es werden Styrol und Acrylnitril im Gewichtsverhältnis 90:10 bis 50:50, vorzugsweise im Gewichtsverhältnis 65:35 bis 75:25, wobei Styrol und/oder Acrylnitril ganz oder teilweise durch copolymerisierbare Monomere, vorzugsweise durch α-Methylstyrol, Methylmethacrylat oder N-Phenylmaleinimid, ersetzt werden kann, in Gegenwart eines löslichen Kautschuks nach bekannten Methoden der Lösungs-, Masse- oder Suspensionspolymerisation polymerisiert.

Es werden Kautschuke mit einer Glasübergangstemperatur ≤10°C eingesetzt; bevorzugt sind Polybutadien, Butadien/Styrol-Copolymerisate (z.B. statistische Copolymerisate, Blockcopolymerisate, Sterncopolymerisate), Butadien/Acrylnitril-Copolymerisate und Polyisopren.

Besonders bevorzugte Kautschuke zur Herstellung des Pfropfpolymerisats C) sind Polybutadien und Butadien/Styrol-Copolymerisate.

Die Kautschukgehalte des erfindungsgemäßen Pfropfpolymerisats C) sind 3 bis 50 Gew.-%, vorzugsweise 5 bis 30 Gew.-%, und besonders bevorzugt 6 bis 25 Gew.-%.

Die Kautschuke liegen im Pfropfpolymerisats C) in Form von Kautschukphasen mit mittleren Teilchendurchmessern von ca. 100 nm bis über 10 000 nm vor, vorzugsweise werden ABS-Polymerisate mit mittleren Teilchendurchmessern der Kautschukphase von 200 nm bis 5 000 nm, besonders bevorzugt 400 nm bis 2 000 nm, insbesondere 500 bis 1 500 nm, eingesetzt.

Als kautschukfreie Thermoplaste D) werden vorzugsweise Copolymerisate des Styrols und Acrylnitrisl im Gewichtsverhältnis 95:5 bis 50:50 verwendet, wobei Styrol und/oder Acrylnitril ganz oder teilweise durch α-Methylstyrol, Methylmethacrylat oder N-Phenylmaleinimid ersetzt werden kann.

Besonders bevorzugt sind Copolymerisate D) mit Anteilen an eingebauten Acrylnitril-Einheiten von unter 30 Gew.-%.

Diese Copolymerisate besitzen vorzugsweise gewichtsmittlere Molekulargewichte $\overline{M}w$ von 20 000 bis 200 000 bzw. Grenzviskositäten [η] von 20 bis 110 ml/g (gemessen in Dimethylformamid bei 25°C).

Einzelheiten zur Herstellung dieser Harze sind beispielsweise in der DE-A 2 420 358 und der DE-A 2 724 360 beschrieben. Durch Masse- bzw. Lösungspolymerisation hergestellte Vinylharze haben sich besonders bewährt. Die Copolymerisate können allein oder in beliebiger Mischung zugesetzt werden.

Außer aus Vinylmonomeren aufgebauten Thermoplastharzen ist auch die Verwendung von Polykondensaten z.B. aromatischen Polycarbonaten, aromatischen Polyestercarbonaten, Polyestern, Polyamiden als kautschukfreies Copolymerisat in den erfindungsgemäßen Zusammensetzungen möglich.

Geeignete thermoplastische Polycarbonate und Polyestercarbonate sind bekannt (vgl. z.B. DE-A 1 495 626, DE-A 2 232 877, DE-A 2 703 376, DE-A 2 714 544, DE-A 3 000 610, DE-A 3 832 396, DE-A 3 077 934), z.B. herstellbar durch Umsetzung von Diphenolen der Formeln (I) und (II)

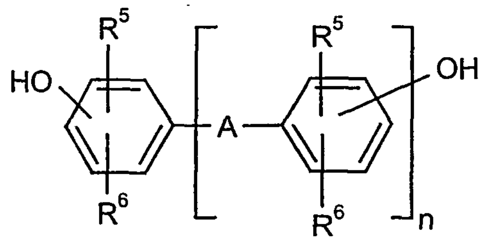

(I)

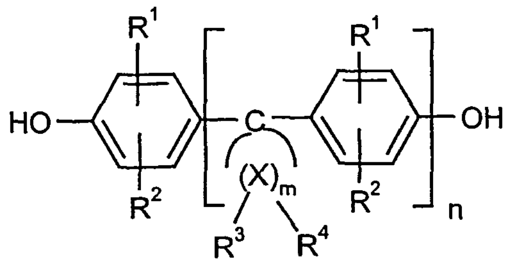

(II)

worin

| | |
|---|---|
| A | eine Einfachbindung, $C_1$-$C_5$-Alkylen, $C_2$-$C_5$-Alkyliden, $C_5$-$C_6$-Cycloalkyliden, -O-, -S-, -SO-, $-SO_2-$ oder -CO- ist, |
| $R^5$ und $R^6$ | unabhängig voneinander für Wasserstoff, Methyl oder Halogen, insbesondere für Wasserstoff, Methyl, Chlor oder Brom stehen, |
| $R^1$ und $R^2$ | unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten, |
| m | eine ganze Zahl von 4 bis 7, bevorzugt 4 oder 5 ist, |
| n | 0 oder 1 ist, |
| $R^3$ und $R^4$ | für jedes X individuell wählbar sind und unabhängig voneinander Wasserstoff oder $C_1$-$C_6$-Alkyl bedeuten und |
| X | Kohlenstoff bedeutet, |

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im Allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-A 2 407 647, 2 407 776, 2715 932).

Die Polyalkylenterephthalate können durch Einbau relativ kleiner Mengen 3- oder 4-wertiger Alkohole oder 3- oder 4-basiger Carbonsäuren, wie sie in der DE-A 1 900 270 und der US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im Allgemeinen eine intrinsische Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexyhnethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus
70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und
gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Den erfindungsgemäßen Zusammensetzungen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Herstellung der erfindungsgemäßen Zusammensetzungen erfolgt durch Vermischen der Komponenten A) +B)+C) sowie gegebenenfalls weiterer Bestandteile auf üblichen Mischaggregaten, vorzugsweise auf Mehrwalzenstühlen, Mischextrudern oder Innenknetern.

Gegenstand der Erfindung ist daher weiterhin ein Verfahren zur Herstellung der erfindungsgemäßen Zusammensetzungen, wobei man die Komponenten A)+B)+C) und gegebenenfalls weitere Bestandteile vermischt und bei erhöhter Temperatur, im Allgemeinen bei Temperaturen von 150°C bis 300°C, compoundiert und extrudiert.

Die Endverformung kann auf handelsüblichen Verarbeitungsaggregaten vorgenommen werden und umfasst z.B. Spritzgießverarbeitung, Plattenextrusion mit gegebenenfalls anschließender Warmverformung, Kaltverformung, Extrusion von Rohren und Profilen, Kalander-Verarbeitung.

## Beispiele

In den folgenden Beispielen sind die angegebenen Teile Gewichtsteile und die angegebenen % Gew.-%, wenn nicht anders angegeben.

### Eingesetzte Komponenten

A) Unter Verwendung von Peroxodisulfatverbindungen als Initiator hergestellte pPfropfkautschuke:

A1) 70 Gew.-Teile (gerechnet als Feststoff) eines bimodalen Polybutadienlatex mit einem mittleren Teilchendurchmesser $d_{50}$ von 244 nm (Teilchengrößenpeaks bei 196 nm und bei 291 nm) und einem Gelgehalt von 66 Gew.-% werden mit Wasser auf einen Feststoffgehalt von ca. 20 Gew.-% gebracht. Danach wird auf 59°C erwärmt und mit 0,45 Gew.-Teilen $K_2S_2O_8$ (gelöst in Wasser) versetzt. Dann werden innerhalb von 6 h parallel 30 Gew.-Teile eines Monomerengemisches (Gew.-Verhältnis Styrol:Acrylnitril = 73:27), 0,08 Gew.-Teile tert.-Dodecylmercaptan und 1,0 Gew.-Teile (gerechnet als Festsubstanz) des Natriumsalzes eines Harzsäuregemisches (Dresinate® 731, Abieta Chemie GmbH, Gersthofen), gelöst in alkalisch eingestelltem Wasser, zudosiert.
Die Reaktionstemperatur wird innerhalb der 6 h auf 80°C angehoben, wonach sich eine 2-stündige Nachreaktionszeit bei dieser Temperatur anschließt. Nach Zugabe von ca. 1 Gew.-Teil eines phenolischen Antioxidans wird mit einem Magnesiumsulfat/Essigsäure-Gemisch koaguliert und das resultierende Pulver nach dem Waschen mit Wasser bei 70°C getrocknet.

A2) Die unter A1) beschriebene Prozedur wird wiederholt, wobei 60 Gew.-Teile (gerechnet als Feststoff) des unter A1) beschriebenen Polybutadienlatex, 40 Gew.-Teile Monomerengemisch (Gew.-Verhältnis Styrol:Acrylnitril = 73:27) und 0,12 Gew.-Teile tert.-Dodecylmercaptan eingesetzt werden. Die sonstigen Mengen ($K_2S_2O_8$, Natriumsalz eines Harzsäuregemisches) sowie Reaktions- und Aufarbeitungsbedingungen bleiben unverändert.

B) Unter Verwendung von Redox-Initiator-Systemen hergestellte Pfropfkautschuke:

B1) 60 Gew.-Teile (gerechnet als Feststoff) eines bimodalen Polybutadienlatex mit einem mittleren Teilchendurchmesser $d_{50}$ von 355 nm (Teilchengrößenpeaks bei 291 nm und 415 nm) und einem Gelgehalt von 65 Gew.-% werden mit Wasser auf einen Feststoffgehalt von ca. 20 Gew.-% gebracht. Danach wird auf 75°C erwärmt, wonach innerhalb von 8 h parallel 0,26 Gew.-Teile tert.-Butylhydroperoxid und 0,22 Gew.-Teile Natriumascorbat sowie innerhalb von 4 h 40 Gew.-Teile eines Monomerengemisches (Gew.-Verhältnis Styrol: Acrylnitril = 73:27) zudosiert werden und die Temperatur innerhalb der ersten 4 h bei 75°C gehalten und danach auf 80°C angehoben wird.

Parallel zu den Monomeren werden 1,72 Gew.-Teile (gerechnet als Festsubstanz) des Natriumsalzes eines Harzsäuregemisches (Dresinate® 731, Abieta Chemie GmbH, Gersthofen) über 4 h zudosiert.

Nach einer einstündigen Nachreaktionszeit bei 80°C wird ca. 1 Gew.-Teil eines phenolischen Antioxidans zugesetzt, mit einem Magnesiumsulfat/Essigsäure-Gemisch koaguliert und das resultierende Pulver nach dem Waschen mit Wasser bei 70°C getrocknet.

B2) Die unter B1) beschriebene Prozedur wird wiederholt, wobei 60 Gew.-Teile (gerechnet als Feststoff) eines trimodalen Polybutadienlatex mit einem mittleren Teilchendurchmesser $d_{50}$ von 298 nm (Teilchengrößenpeaks bei 196 nm, 291 nm und 415 nm) und einem Gelgehalt von 66 Gew.-% eingesetzt werden. Die sonstigen Mengen (Monomere, Initiator, Emulgator) sowie Reaktions- und Aufarbeitungsbedingungen bleiben unverändert.

C) Durch Lösungs-, Masse- oder Suspensionspolymerisation hergestellte Pfropfkautschuke:

C1) Masse-ABS Magnum 3504 (Dow Chemical Europe S.A., Horgen, Schweiz).

Ausprüfung der Formmassen

Die oben beschriebenen Polymerkomponenten werden in den in Tabelle 1 angegebenen Anteilen mit 2 Gew.-Teilen Ethylendiaminbisstearylamid und 0,1 Gew.-Teilen eines Silikonöls in einem Innenkneter vermischt und nach Granulierung zu Prüfstäben und zu einer ebenen Platte (zur Beurteilung der Oberfläche und des Kontrastverhältnisses, Maße 60 x 40 x 2 mm) verarbeitet.

Folgende Daten werden ermittelt:

Kerbschlagzähigkeit bei Raumtemperatur ($a_k$(RT)) nach ISO 180/1A (Einheit: $kJ/m^2$),

Oberflächenglanz nach DIN 67 530 bei einem Reflektionswinkel von 20° (Reflektometerwert),

Yellowness-Index (YI) gemäß ASTM-Norm D 1925 (Lichtart: C, Beobachter: 2°, Meßöffnung: Large Area Value) nach der Gleichung YI = (128X - 106Z)/Y, mit X, Y, Z = Farbkoordinaten gemäß DIN 5033,

Kontrastverhältnis (Contrast Ratio CR) als Maßzahl für die Opazität des Materials durch Messung einer Probe vor einem schwarzen und einem weißen Hintergrund gemäß

$$CR = \frac{Y\ (\text{vor schwarzem Hintergrund})}{Y\ (\text{vor weißem Hintergrund})} \times 100$$

wobei Y den Normfarbwert aus dem CIElab-Farbraum bei Lichtart D 65 und 10° Beobachter beschreibt (siehe DIN 5033, Ulbricht-Kugel). Die Messung erfolgte unter Verwendung eines Spektralphotometers Dataflash SF 600 plus CT.

Die Beurteilung der Verarbeitbarkeit der Formmassen erfolgt durch Messung des notwendigen Fülldrucks bei 240°C (Einheit: bar) (siehe S. Anders et al., Kunststoffe 81 (1991), 4, Seiten 336 bis 340 und dort zitierte Literatur).

Die Ergebnisse sind in Tabelle 2 zusammengestellt.

Daraus ist ersichtlich, dass die erfindungsgemäßen Formmassen deutlich reduzierte Opazitätswerte und Yellowness-Index (YI)-Werte aufweisen. Andere wichtige Eigenschaften, wie z.B. Kerbschlagzähigkeit oder thermoplastische Verarbeitbarkeit, sind ebenfalls verbessert bzw. werden nicht negativ beeinflusst.

**Tabelle 1** Zusamensetzungen der ausgeprüften Formmassen

| Beispiel | A1 Gew.-Teile | A2 Gew.-Teile | B1 Gew.-Teile | B2 Gew.-Teile | C1 Gew.-Teile |
|---|---|---|---|---|---|
| 1 | - | 5 | 5 | - | 90 |
| 2 | - | 10 | 10 | - | 80 |
| 3 | 4,3 | - | - | 5 | 90,7 |
| 4 | 8,6 | - | - | 10 | 81,4 |
| 5 (Vergleich) | - | 10 | - | - | 90 |
| 6 (Vergleich) | - | - | 10 | - | 90 |
| 7 (Vergleich) | - | - | - | - | 100 |

**Tabelle 2** Prüfdaten der untersuchten Zusammensetzungen

| Beispiel | $a_k^{RT}$ (kJ/m²) | Fülldruck (bar) | Glanzgrad | YI | CR (%) |
|---|---|---|---|---|---|
| 1 | 36 | 217 | 64 | 24 | 73 |
| 2 | 41 | 226 | 61 | 25 | 77 |
| 3 | 38 | 217 | 75 | 22 | 74 |
| 4 | 43 | 223 | 62 | 25 | 77 |
| 5 (Vergleich) | 39 | 220 | 63 | 29 | 80 |
| 6 (Vergleich) | 37 | 234 | 48 | 27 | 78 |
| 7 (Vergleich) | 24 | 226 | 59 | 20 | 80 |

**Patentansprüche**

1. Zusammensetzung enthaltend

A) mindestens einen Pfropfkautschuk hergestellt durch radikalische Emulsionspolymerisation von Styrol und Acrylnitril in Gegenwart mindestens eines in Latexform vorliegenden Butadienkautschuks a) mit einer Glasübergangstemperatur unter 0° C unter Verwendung von mindestens einer Peroxodisulfatverbindung als Initiator,
B) mindestens einen Pfropfkautschuk hergestellt durch radikalische Emulsionspolymerisation von Styrol und Acrylnitril in Gegenwart mindestens eines in Latexform vorliegenden Butadienkautschuks b) mit einer Glasübergangstemperatur unter 0° C unter Verwendung von mindestens einem Redox-System als Initiator, sowie
C) mindestens einem Pfropfpolymerisat, welches erhältlich ist durch Lösungs-, Masse- oder Suspensionspolymerisation von Styrol und Acrylnitril im Gewichtsverhältnis 90:10 bis 50:50in Gegenwart eines Butadienkautschuks, wobei das Massenverhältnis von eingesetzten Pfropfmonomeren zu eingesetztem Kautschuk 50:50, höchstens 97:3 beträgt.

2. Zusammensetzungen gemäß Anspruch 1 enthaltend zusätzlich ein kautschukfreies thermoplastisches Vinylpolymerisat als Komponente D) und/oder ein nicht aus Vinylmonomeren aufgebautes Thermoplastharz.

3. Zusammensetzungen gemäß Anspruch 2 enthaltend als nicht aus Vinylmonomeren aufgebautes Thermoplastharz ein Harz ausgewählt aus aromatischem Polycarbonat, aromatischem Polyestercarbonat, Polyester, Polyamid oder Mischungen daraus.

4. Zusammensetzungen gemäß Ansprüchen 1 bis 3, enthaltend 1 bis 50 Gew.-Teile A) und B) und 50 bis 99 Gew.-Teile C).

5. Zusammensetzungen gemäß einem oder mehrerer der vorstehenden Ansprüche enthaltend 2,5 bis 45 Gew.-Teile A) und B) und 55 bis 97,5 Gew.-Teile C).

6. Zusammensetzung gemäß Anspruch 1 enthaltend

A) mindestens einen Pfropfkautschuk hergestellt durch radikalische Emulsionspolymerisation von Styrol und Acrylnitril im Gewichtsverhältnis 90:10 bis 50:50 in Gegenwart mindestens eines in Latexform vorliegenden Butadienkautschuks unter Verwendung von mindestens einer Peroxodisulfatverbindung als Initiator,
B) mindestens einen Pfropfkautschuk hergestellt durch radikalische Emulsionspolymerisation von Styrol und Acrylnitril im Gewichtsverhältnis 90:10 bis 50:50 in Gegenwart mindestens eines in Latexform vorliegenden Butadienkautschuks unter Verwendung von mindestens einem Redox-System als Initiator,
C) mindestens einen Pfropfpolymerisat, welches erhältlich ist durch Lösungs-, Masse- oder Suspensionspolymerisation von Styrol und Acrylnitril im Gewichtsverhältnis 90:10 bis 50:50 in Gegenwart eines Kautschuks, wobei das Massenverhältnis von eingesetzten Pfropfmonomeren zu eingesetztem Kautschuk 70:30 bis 95:5 ist und gegebenenfalls
D) mindestens ein thermoplastisches kautschukfreies Polymerisat erhalten durch Polymerisation von Styrol und Acrylnitril im Gewichtsverhältnis 90:10 bis 50:50.

7. Zusammensetzungen gemäß einem oder mehrerer der vorstehenden Ansprüche, in denen Komponente B) hergestellt wird durch Initiierung mit einem Redox-System, worin das Oxidationsmittel auswählt ist aus der Gruppe Di tert.-butylperoxid, Cumolhydroperoxid, Dicyclohexylpercarbonat, tert.-Butylhydroperoxid, p-Menthanperoxid, $H_2O_2$ oder Mischungen hieraus, und worin das Reduktionsmittel ausgewählt ist aus der Gruppe der Salze der Sulfinsäure, Salze der schwefligen Säure, Natriumdithionit, Natriumsulfit, Natriumhyposulfit, Natriumhydrogensulfit, Ascorbinsäure sowie deren Salze, Natriumformaldehydsulfoxylat, Mono-und Dihydroxyaceton, Zucker, Glucose, Dextrose, Eisen(II)-salzen, Zinn(II)-salzen und Titan(II)-salzen oder Mischungen hieraus.

8. Zusammensetzungen gemäß einem oder mehrerer der vorstehenden Ansprüche, wobei zur Herstellung der Pfropfkautschuke A) und B) jeweils ein Kautschuklatex mit monomodaler Teilchengrößenverteilung eingesetzt wird.

9. Zusammensetzungen gemäß Ansprüchen 1 bis 7, wobei zur Herstellung der Pfropfkautschuke A) und B) jeweils ein Kautschuklatex mit bimodaler Teilchengrößenverteilung eingesetzt wird.

10. Zusammensetzungen gemäß Ansprüchen 1 bis 7, wobei zur Herstellung des Pfropfkautschuks A) ein Kautschuklatex mit monomodaler Teilchengrößenverteilung und zur Herstellung des Pfropfkautschuks B) ein Kautschuklatex mit bimodaler Teilchengrößenverteilung eingesetzt wird.

11. Zusammensetzungen gemäß Ansprüchen 1 bis 7, wobei zur Herstellung des Pfropfkautschuks A) ein Kautschuklatex mit monomodaler Teilchengrößenverteilung und zur Herstellung des Pfropfkautschuks B) ein Kautschuklatex mit trimodaler Teilchengrößenverteilung eingesetzt wird.

12. Zusammensetzungen gemäß Ansprüchen 1 bis 7, wobei zur Herstellung des Pfropfkautschuks A) ein Kautschuklatex mit bimodater Teilchengrößenverteilung und zur Herstellung des Pfropfkautschuks B) ein Kautschuklatex mit trimodaler Teilchengrößenverteilung eingesetzt wird.

13. Zusammensetzungen gemäß Ansprüchen 1 bis 7, wobei zur Herstellung des Pfropfkautschuks A) ein Kautschuklatex mit bimodaler Teilchengrößenverteilung und zur Herstellung des Pfropfkautschuks B) ein Kautschuklatex mit monomodaler Teilchengrößenverteilung eingesetzt wird.

14. Zusammensetzungen gemäß einem oder mehrerer der vorstehenden Ansprüche, **dadurch gekennzeichnet, dass** zur Herstellung der Pfropfkautschuke A) und B) Kautschuklatices mit mittleren Teilchendurchmessern ($d_{50}$) von 50 bis 600 nm eingesetzt werden.

15. Zusammensetzungen gemäß einem oder mehrerer der vorstehenden Ansprüche, **dadurch gekennzeichnet, dass** zur Herstellung der Pfropfkautschuke A) und B) Kautschuklatices mit mittleren Teilchendurchmessern ($d_{50}$) von 100 bis 500 nm eingesetzt werden.

**16.** Zusammensetzungen gemäß Ansprüchen 14 oder 15, **dadurch gekennzeichnet, dass** der mittlere Teilchendurchmesser ($d_{50}$) des zur Herstellung des Pfropfkautschuks A) eingesetzten Kautschuklatex kleiner als der mittlere Teilchendurchmesser ($d_{50}$) des zur Herstellung des Pfropfkautschuks B) ein gesetzten Kautschuklatex ist.

**17.** Zusammensetzungen gemäß einem oder mehrerer der vorstehenden Ansprüche, wobei die Kautschuke der Komponente C) mittlere Teilchendurchmesser von 100 bis 10 000 nm haben.

**18.** Zusammensetzungen gemäß einem oder mehrerer der vorstehenden Ansprüche, wobei die Kautschuke der Komponente C) mittlere Teilchendurchmesser von 200 nm bis 5 000 nm haben.

**19.** Zusammensetzungen gemäß einem oder mehrerer der vorstehenden Ansprüche, wobei die Kautschuke der Komponente C) mittlere Teilchendurchmesser von 400 nm bis 2 000 nm haben.

**20.** Verfahren zur Herstellung von Zusammensetzungen, **dadurch gekennzeichnet, dass**

A) mindestens ein Pfropfkautschuk hergestellt durch radikalische Emulsions polymerisation von Styrol und Acrylnitril in Gegenwart mindestens eines in Latexform vorliegenden Butadienkautschuks a) mit einer Glasübergangstemperatur unter 0 °C unter Verwendung von mindestens einer Peroxodisulfatverbindung als Initiator,
B) mindestens ein Pfropfkautschuk hergestellt durch radikalische Emulsionspolymerisation von Styrol und Acrylnitril in Gegenwart mindestens eines in Latexform vorliegenden Butadienkautschuks b) mit einer Glasübergangstemperatur unter 0 °C unter Verwendung von mindestens einem Redox-System als Initiator und
C) mindestens ein Pfropfpolymerisat, welches erhältlich ist durch Lösungs-, Masse- oder Suspensionspolymerisation von Styrol und Acrylnitril im Gewichtsverhältnis 90:10 bis 50:50in Gegenwart eines Kautschuks, wobei das Massenverhältnis von eingesetzten Pfropfmonomeren zu eingesetztem Kautschuk 50:50 bis 97:3 ist

sowie gegebenenfalls weitere Bestandteile gemischt und anschließend compoundiert werden.

**21.** Verwendung der Zusammensetzungen gemäß Ansprüchen 1 bis 19 zur Herstellung von Formteilen.

**22.** Formteile, erhältlich aus Zusammensetzungen gemäß der Anspruche 1 bis 19.

## Claims

**1.** Composition comprising

A) at least one graft rubber, manufactured by radical emulsion polymerisation of styrene and acrylonitrile in the presence of at least one butadiene rubber a), present in latex form, with a glass transition temperature of less than 0 °C, making use of at least one peroxodisulphate compound as initiator,
B) at least one graft rubber, manufactured by radical emulsion polymerisation of styrene and acrylonitrile in the presence of at least one butadiene rubber b), with a glass transition temperature of less than 0 °C, making use of at least one Redox system as initiator, and
C) at least one graft rubber, which is obtainable by the solution, mass, or suspension polymerisation of styrene and acrylonitrile in a weight ratio of 90:10 to 50:50, in the presence of a butadiene rubber, whereby the weight ratio of the prop monomers used to the rubber used is 50:50, and maximum 97:3.

**2.** Compositions according to Claim 1, containing additionally a rubber-free thermoplastic vinyl polymerisate as component D) and/or a thermoplastic not formed from vinyl monomers.

**3.** Compositions according to Claim 2, containing, as the thermoplastic resin not formed from vinyl monomers, a resin selected from aromatic polycarbonate, aromatic polyester carbonate, polyester, polyamide, or mixtures thereof.

**4.** Compositions according to Claims 1 to 3, containing 1 to 50 parts by weight of A) and B) and 50 to 99 parts by weight of C).

**5.** Compositions according to one or more of the foregoing Claims, containing 2.5 to 45 parts by weight of parts A) and B) and 55 to 97.5 parts by weight of C).

**6.** Composition according to Claim 1, containing

A) at least one graft rubber, manufactured by radical emulsion polymerisation of styrene and acrylonitrile in a weight ratio of 90:10 to 50:50 in the presence of at least one butadiene rubber present in latex form, making use of at least one peroxodisulphate compound as initiator,
B) at least one graft rubber, manufactured by radical emulsion polymerisation of styrene and acrylonitrile in a weight ratio of 90:10 to 50:50, in the presence of at least one butadiene rubber present in latex form, making use of at least one Redox system as initiator,
C) at least one graft rubber, which is obtainable by the solution, mass, or suspension polymerisation of styrene and acrylonitrile in a weight ratio of 90:10 to 50:50, in the presence of a rubber, whereby the weight ratio of the prop monomers used to the rubber used is 70:30 to 95:5, and, as appropriate,
D) at least one thermoplastic rubber-free polymerisate, obtained by the polymerisation of styrene and acrylonitrile in a weight ratio of 90:10 to 50:50.

**7.** Compositions according to one or more of the foregoing Claims, in which component B) is produced by initiation with a Redox system, wherein the oxidation agent is selected from the group Di tert.-butyl-peroxide, cumol hydroperoxide, dicyclohexyl percarbonate, tert.-butyl hydroperoxide, p-methane peroxide, $H_2O_2$, or mixtures thereof, and wherein the reduction agent is selected from the group of salts of sulphinic acid, salts of the sulphurous acids, sodium dithionite, sodium sulphite, sodium hyposulphite, sodium hydrogen sulphite, ascorbic acid, and their salts, sodium formaldehyde sulphoxylate, mono- and dihydro acetone, sugar, glucose, dextrose, iron (II) salts, tin (II) salts, and titanium (II) salts, or mixtures thereof.

**8.** Compositions according to one or more of the foregoing Claims, whereby for the production of the graft rubbers A) and B) in each case a rubber latex is used with monomodal particle size distribution.

**9.** Compositions according to Claims 1 to 7, whereby for the production of the graft rubbers A) and B) in each case a rubber latex is used with bimodal particle size distribution.

**10.** Compositions according to Claims 1 to 7, whereby for the production of the graft rubber A) a rubber latex is used with monomodal particle size distribution and for the production of the graft rubber B) a rubber latex is used with bimodal particle size distribution.

**11.** Compositions according to Claims 1 to 7, whereby for the production of the graft rubber A) a rubber latex is used with monomodal particle size distribution and for the production of the graft rubber B) a rubber latex is used with trimodal particle size distribution.

**12.** Compositions according to Claims 1 to 7, whereby for the production of the graft rubber A) a rubber latex is used with bimodal particle size distribution and for the production of the graft rubber B) a rubber latex is used with trimodal particle size distribution.

**13.** Compositions according to Claims 1 to 7, whereby for the production of the graft rubber A) a rubber latex is used with bimodal particle size distribution and for the production of the graft rubber B) a rubber latex is used with monomodal particle size distribution.

**14.** Compositions according to one or more of the foregoing Claims, **characterised in that,** for the production of the graft rubbers A) and B) a rubber lattice is used with mean particle diameters ($d_{50}$) from 50 to 600 nm.

**15.** Compositions according to one or more of the foregoing Claims, **characterised in that,** for the production of the graft rubbers A) and B) a rubber lattice is used with mean particle diameters ($d_{50}$) from 100 to 500 nm.

**16.** Compositions according to Claims 14 or 15, **characterised in that** the mean particle diameter ($d_{50}$) of the rubber latex used for the production of the graft rubber A) is smaller than the mean particle diameter ($d_{50}$) of the rubber latex used for the production of the graft rubber B).

**17.** Compositions according to one or more of the foregoing Claims, whereby the rubbers of the component C) have mean particle diameters from 100 to 10 000 nm.

**18.** Compositions according to one or more of the foregoing Claims, whereby the rubbers of the component C) have

mean particle diameters from 200 to 5 000 nm.

**19.** Compositions according to one or more of the foregoing Claims, whereby the rubbers of the component C) have mean particle diameters from 400 to 2 000 nm.

**20.** Method for the production of compositions, **characterised in that**

A) at least one graft rubber is manufactured by radial emulsion polymerisation of styrene and acrylonitrile in the presence of at least one butadiene rubber a) present in latex form, with a glass transition temperature of less than 0 °C, with the use of at least one peroxide sulphate compound as initiator,
B) at least one graft rubber is manufactured by radial emulsion polymerisation of styrene and acrylonitrile in the presence of at least one butadiene rubber b) present in latex form, with a glass transition temperature of less than 0 °C, with the use of at least one Redox system as initiator, and
C) at least one prop polymerisate, which can be obtained by solution, mass, or suspension polymerisation of styrene and acrylonitrile in a weight ratio from 90:10 to 50:50 in the presence of a rubber, whereby the mass ratio of the prop monomers used to the rubber used is 50:50 to 97:3,

and, as appropriate, further constituents are mixed and then compounded.

**21.** Use of the compositions according to Claims 1 to 19 for the production of moulded parts.

**22.** Moulded parts, obtainable from compositions according to Claims 1 to 19.

## Revendications

**1.** Composition, contenant

A) au moins un caoutchouc greffé, préparé par polymérisation radicalaire en émulsion, de styrène et d'acrylonitrile en présence d'au moins un caoutchouc de butadiène présent sous forme de latex a) avec une température de transition vitreuse en dessous de 0°C par utilisation d'au moins un composé peroxodisulfate comme initiateur,
B) au moins un caoutchouc greffé, préparé par polymérisation radicalaire en émulsion, de styrène et d'acrylonitrile en présence d'au moins un caoutchouc de butadiène présent sous forme de latex b) avec une température de transition vitreuse en dessous de 0°C par utilisation d'au moins un système redox comme initiateur, ainsi que
C) au moins un polymère greffé, qui peut être obtenu par polymérisation en solution, en masse ou en suspension de styrène et d'acrylonitrile dans un rapport pondéral de 90: 10 à 50:50 en présence d'un caoutchouc de butadiène, le rapport massique des monomères de greffage utilisés au caoutchouc utilisé étant de 50:50, au plus de 97:3.

**2.** Compositions selon la revendication 1, contenant en plus comme composant D) un polymère vinylique thermoplastique sans caoutchouc, et/ou une résine thermoplastique qui n'est pas élaborée à partir de monomères vinyliques.

**3.** Compositions selon la revendication 2, contenant en tant que résine thermoplastique non élaborée à partir de monomères vinyliques une résine choisie parmi le polycarbonate aromatique, le polyestercarbonate aromatique, le polyester, le polyamide ou des mélanges de ceux-ci.

**4.** Compositions selon les revendications 1 à 3, contenant 1 à 50 parties en poids de A) et de B) et 50 à 99 parties en poids de C).

**5.** Compositions selon l'une ou plusieurs des revendications précédentes, contenant 2,5 à 45 parties en poids de A) et de B) et 55 à 97,5 parties en poids de C).

**6.** Composition selon la revendication 1, contenant

A) au moins un caoutchouc greffé, préparé par polymérisation radicalaire en émulsion, de styrène et d'acrylonitrile dans un rapport pondéral de 90:10 à 50:50 en présence d'au moins un caoutchouc de butadiène présent sous forme de latex par utilisation d'au moins un composé peroxodisulfate comme initiateur,
B) au moins un caoutchouc greffé, préparé par polymérisation radicalaire en émulsion, de styrène et d'acrylonitrile dans un rapport pondéral de 90: 10 à 50:50 en présence d'au moins un caoutchouc de butadiène présent sous forme de latex par utilisation d'au moins un système redox comme initiateur,
C) au moins un polymère greffé, qui peut être obtenu par polymérisation en solution, en masse ou en suspension de styrène et d'acrylonitrile dans un rapport pondéral de 90:10 à 50:50 en présence d'un caoutchouc, le rapport massique des monomères de greffage utilisés au caoutchouc utilisé étant de 70:30, à 95:5 et, le cas échéant,
D) au moins un polymère thermoplastique sans caoutchouc, obtenu par polymérisation de styrène et d'acrylonitrile dans un rapport pondéral de 90: 10 à 50:50.

**7.** Compositions selon l'une ou plusieurs des revendications précédentes, dans lesquelles le composant B) est préparé par initialisation avec un système redox, dans lequel l'agent oxydant est choisi dans le groupe contenant les peroxyde de ditertiobutyle, hydroperoxyde de cumène, percarbonate de dicyclohexyle, hydroperoxyde de tertiobutyle, peroxyde de p-menthane, $H_2O_2$ ou des mélanges de ceux-ci, et dans lesquelles l'agent réducteur est choisi dans le groupe contenant les sels de l'acide sulfinique, les sels de l'acide sulfureux, le dithionite de sodium, le sulfite de sodium, l'hyposulfite de sodium, l'hydrogénosulfite de sodium, l'acide ascorbique ainsi que leurs sels, le formaldéhydesulfoxylate de sodium, la mono- et la dihydroxyacétone, le sucre, le glucose, le dextrose, les sels de fer (II), les sels d'étain (II) et les sels de titane (II), ou les mélanges de ceux-ci.

**8.** Compositions selon l'une ou plusieurs des revendications précédentes, dans lesquelles, pour la préparation des caoutchoucs greffés A) et B), on utilise dans chaque cas un latex de caoutchouc à distribution granulométrique monomodale.

**9.** Compositions selon les revendications 1 à 7, dans lesquelles, pour la préparation des caoutchoucs greffés A) et B), on utilise dans chaque cas un latex de caoutchouc à distribution granulométrique bimodale.

**10.** Compositions selon les revendications 1 à 7, dans lesquelles, pour la préparation du caoutchouc greffé A), on utilise un latex de caoutchouc à distribution granulométrique monomodale, et pour la préparation du caoutchouc greffé B), on utilise un latex de caoutchouc à distribution granulométrique bimodale.

**11.** Compositions selon les revendications 1 à 7, dans lesquelles, pour la préparation du caoutchouc greffé A), on utilise un latex de caoutchouc à distribution granulométrique monomodale, et pour la préparation du caoutchouc greffé B), on utilise un latex de caoutchouc à distribution granulométrique trimodale.

**12.** Compositions selon les revendications 1 à 7, dans lesquelles, pour la préparation du caoutchouc greffé A), on utilise un latex de caoutchouc à distribution granulométrique bimodale, et pour la préparation du caoutchouc greffé B), on utilise un latex de caoutchouc à distribution granulométrique trimodale.

**13.** Compositions selon les revendications 1 à 7, dans lesquelles, pour la préparation du caoutchouc greffé A), on utilise un latex de caoutchouc à distribution granulométrique bimodale, et pour la préparation du caoutchouc greffé B), on utilise un latex de caoutchouc à distribution granulométrique monomodale.

**14.** Compositions selon l'une ou plusieurs des revendications précédentes, **caractérisées en ce que** pour la préparation des caoutchoucs greffés A) et B), on utilise des latex de caoutchouc avec des diamètres de particule moyens ($d_{50}$) de 50 à 600 nm.

**15.** Compositions selon l'une ou plusieurs des revendications précédentes, **caractérisées en ce que** pour la préparation des caoutchoucs greffés A) et B), on utilise des latex de caoutchouc avec des diamètres de particule moyens ($d_{50}$) de 100 à 500 nm.

**16.** Compositions selon les revendications 14 ou 15, **caractérisées en ce que** le diamètre de particule moyen (dso) du latex de caoutchouc utilisé pour la préparation du caoutchouc greffé A) est plus petit que le diamètre de particule moyen ($d_{50}$) du latex de caoutchouc utilisé pour la préparation du caoutchouc greffé B).

**17.** Compositions selon l'une ou plusieurs des revendications précédentes, dans lesquelles les caoutchoucs du composant C) ont des diamètres de particule moyens de 100 à 10 000 nm.

**18.** Compositions selon l'une ou plusieurs des revendications précédentes, dans lesquelles les caoutchoucs du composant C) ont des diamètres de particule moyens de 200 nm à 5 000 nm.

**19.** Compositions selon l'une ou plusieurs des revendications précédentes, dans lesquelles les caoutchoucs du composant C) ont des diamètres de particule moyens de 400 nm à 2 000 nm.

**20.** Procédé de préparation de compositions, **caractérisé en ce que**

A) au moins un caoutchouc greffé préparé par polymérisation radicalaire en émulsion de styrène et d'acrylonitrile en présence d'au moins un caoutchouc de butadiène présent sous forme de latex a) avec une température de transition vitreuse en dessous de 0°C, par utilisation d'au moins un composé peroxodisulfate comme initiateur,
B) au moins un caoutchouc greffé, préparé par polymérisation radicalaire en émulsion de styrène et d'acrylonitrile en présence d'au moins un caoutchouc de butadiène présent sous forme de latex b) avec une température de transition vitreuse en dessous de 0°C, par utilisation d'au moins un système redox comme initiateur, ainsi que
C) au moins un polymère greffé, qui peut être obtenu par polymérisation en solution, en masse ou en suspension de styrène et d'acrylonitrile dans un rapport pondéral de 90: 10 à 50:50 en présence d'un caoutchouc de butadiène, le rapport massique des monomères de greffage au caoutchouc utilisé étant de 50:50 à 97:3,

ainsi que, le cas échéant, d'autres composants, sont mélangés et ensuite compoundés.

**21.** Utilisation de compositions selon les revendications 1 à 19 pour la fabrication de pièces moulées.

**22.** Pièces moulées pouvant être obtenues à partir des compositions selon les revendications 1 à 19.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4430478 A
- US 4713420 A
- EP 190884 A
- EP 390781 A
- EP 436381 A
- EP 845497 A
- EP 0029613 A
- EP 0007810 A
- DD 144415 A
- DE 1233131 A
- DE 1258076 A
- DE 2101650 A
- US 1379391 A
- JP 55125102 A
- DE 1300241 A
- DE 2659175 A
- EP 67536 A
- EP 103657 A
- EP 412801 A
- EP 505798 A
- US 4252911 A
- US 4362850 A
- US 5286792 A
- DE 2420358 A
- DE 2724360 A
- DE 1495626 A
- DE 2232877 A
- DE 2703376 A
- DE 2714544 A
- DE 3000610 A
- DE 3832396 A
- DE 3077934 A
- DE 2842005 A
- DE 3506472 A
- DE 2407647 A
- DE 2407776 A
- DE 2715932 A
- DE 1900270 A
- US 3692744 A


### In der Beschreibung aufgeführte Nicht-Patentliteratur


- **HOUBEN-WEYL.** Methoden der Organischen Chemie, Makromolekulare Stoffe. Thieme Verlag, 1961, 674
- **HOUBEN-WEYL.** Methoden der Organischen Chemie, Makromolekulare Stoffe. Thieme Verlag, 1961, 339
- **W. SCHOLTAN ; H. LANGE.** *Kolloid Z. u. Z. Polymere,* 1972, vol. 250, 782-796
- **HOUBEN-WEYL.** Methoden der Organischen Chemie, Makromolekulare Stoffe. Thieme Verlag, 1961, 307
- Kunststoff-Handbuch. Carl Hanser Verlag, 1973, vol. VIII, 695 ff
- **S. ANDERS et al.** *Kunststoffe,* 1991, vol. 81 (4), 336-340